# EUROPÄISCHE PATENTSCHRIFT

(11) **EP 2 953 908 B1**
(45) Veröffentlichungstag und Bekanntmachung des Hinweises auf die Patenterteilung: **13.10.2021**
(21) Anmeldenummer: 14708791.0
(22) Anmeldetag: 05.02.2014
(51) Int. Cl.: C03B 9/32, B65D 23/12, C03B 9/347, C03B 23/26, B65D 23/14

(54) **VERFAHREN ZUR HERSTELLUNG EINER FLASCHE MIT EINEM BEFESTIGTEN GEGENSTAND SOWIE ENTSPRECHEND HERGESTELLTE FLASCHE**
PROCESS TO PRODUCE A BOTTLE WITH A FIXED ADDITIONAL ELEMENT, AN THE ASSOCIATED BOTTLE
PRODÉDÉ DE PRODUCTION D'UNE BOUTEILLE AYANT UN ÉLÉMENT FIXE ADDITIONEL, ET PRODUIT ASSOCIÉ

(30) Priorität: 06.02.2013 AT 5001513 U
(43) Veröffentlichungstag der Anmeldung: 16.12.2015
(73) Patentinhaber: Cukman, Rosemarie, 8481 Weinburg am Sassbach (AT)
(72) Erfinder: Cukman, Rosemarie, 8481 Weinburg am Sassbach (AT)
(74) Vertreter: Wirnsberger, Gernot
(86) Internationale Anmeldenummer: PCT/AT2014/050035
(87) Internationale Veröffentlichungsnummer: WO 2014/121317

(56) Entgegenhaltungen:
- EP-A1- 2 551 244
- DE-U1- 8 715 959
- FR-A- 615 405
- FR-A1- 2 217 225
- FR-A3- 2 761 663
- FR-E- 15 346
- US-A- 1 554 191
- US-A- 5 201 431
- US-A- 6 131 755
- US-A1- 2004 076 109
- US-A1- 2004 226 904
- US-A1- 2005 067 414
- US-A1- 2006 042 969
- US-A1- 2011 100 852

## Beschreibung

Die Erfindung betrifft ein Verfahren zur Herstellung einer Flasche aus beispielsweise Glas, insbesondere einer Getränkeflasche, wobei auf der Flasche ein Gegenstand befestigt wird, wobei die Flasche mit einer Vertiefung ausgebildet wird, woraufhin in der Vertiefung der Gegenstand lösbar befestigt wird.

Des Weiteren betrifft die Erfindung eine Flasche aus beispielsweise Glas, insbesondere eine Getränkeflasche, wobei auf der Flasche ein Gegenstand befestigt ist, wobei die Flasche mit einer Vertiefung ausgebildet ist, in welcher der Gegenstand lösbar befestigt ist.

Ein gattungsgemäßes Verfahren sowie eine Flasche der eingangs genannten Art sind aus der FR 2217225 bekannt geworden. In diesem Dokument ist eine Flasche mit einer Vertiefung offenbart, in welcher Vertiefung ein starrer Adapter positioniert wird, der einen Gegenstand halten kann.

Zu festlichen Anlässen, Jubiläen, persönlich wichtigen Ereignissen und dergleichen ist es weit verbreitet, der im Blickpunkt stehenden Person eine Weinflasche, Sektflasche oder gegebenenfalls auch Champagnerflasche zu schenken. Bekannt ist, dass die geschenkten Flaschen manchmal mit einem zusätzlichen Präsent verziert werden, um dem Geschenk insgesamt einen höheren Wert zu verleihen. Gebräuchlich ist es beispielsweise, am Flaschenhals einer Flasche mit einer Schnur eine Banknote zu befestigen, deren Wert deutlich höher als jener beispielsweise einer Weinflasche ist. Das Geschenk in Form der Kombination einer Weinflasche mit darauf befestigter Banknote hat dann einen Gesamtwert, bei dem der Anteil der Banknote jenen des Weines in der Regel deutlich übersteigt.

Nachteilig dabei ist allerdings, dass die Banknote in der Regel sogleich entfernt wird. Zurück bleibt die Weinflasche oder gegebenenfalls andere Spirituosenflasche, die an sich keinen besonderen Wert mehr aufweist. Die bewusste Hochwertigkeit des Geschenkes geht somit rasch verloren. Nachteilig ist auch, dass sich derartige Geschenke bloß individuell im privaten Bereich zusammenstellen lassen. Es ist schwer vorstellbar, im geschäftlichen Verkehr entsprechend individualisierte, hochwertige Geschenkpakete zu vermarkten, zumal aufgrund der losen Befestigung der Banknoten ein Anbieten in einem Geschäft kaum möglich ist, ohne einen Diebstahl zu riskieren.

Hier setzt die Erfindung an. Aufgabe der Erfindung ist es, ein Verfahren der eingangs genannten Art anzugeben, mit dem auf einfache Weise ein möglichst dauerhaft hochwertiges Geschenk mit einer Flasche erstellt werden kann, wobei es jedoch auch möglich ist, den auf der Flasche befestigten speziellen, insbesondere höherwertigen Teil bei Bedarf relativ einfach zu entfernen.

Des Weiteren ist es ein Ziel der Erfindung, eine entsprechend ausgebildete Flasche anzugeben.

Die verfahrensmäßige Aufgabe der Erfindung wird gelöst, wenn bei einem Verfahren der eingangs genannten Art der Gegenstand in einen zumindest teilweise flexiblen Adapter aufgenommen und mit dem Adapter in der Vertiefung positioniert wird und ein Adapter aus einem elastisch verformbaren Kunststoff eingesetzt wird.

Mit einem erfindungsgemäßen Verfahren ist es möglich, eine Flasche mit einem darauf aufgebrachten Gegenstand herzustellen, der mit der Flasche grundsätzlich dauerhaft verbunden bleibt, bei Bedarf jedoch aufgrund der Lösbarkeit auch entfernt werden kann. Dadurch ist es insbesondere möglich, hochwertige Gegenstände wie Schmuckgegenstände oder Diamanten auf der Flasche zu platzieren, sodass die Kombination aus Flasche mit dem darauf befestigten Gegenstand eine gut handhabbare feste Einheit bildet, die auch in Verkaufsräumen ohne größere Diebstahlgefahr präsentiert werden kann. Sofern erforderlich, kann der Gegenstand von der Flasche gelöst werden, beispielsweise wenn der oder die Beschenkte in finanzieller Not ist und sich der Gegenstand wirtschaftlich verwerten lässt. Durch die vorgesehene Vertiefung kann der Gegenstand vorteilhafterweise in dieser positioniert werden, sodass sich ein Anbringen des Gegenstandes am Flaschenhals und damit ein loses Herumbaumeln erübrigt. Vielmehr behält die Flasche vom optischen Gesamteindruck an sich eine ursprüngliche Erscheinungsform und schließt der auf der Flasche befestigte Gegenstand im Bereich seiner Aufbringung mit der Oberfläche der Flasche bündig ab. Neben besonders hochwertigen Gegenständen können dabei auch weniger wertvolle Gegenstände vorgesehen sein, die jedoch geeignet sind, die Flasche besonders zu individualisieren, z. B. Schokoladeplättchen mit Werbebotschaften.

Die Flasche kann dabei aus einem beliebigen Material bestehen, z. B. einem Kunststoff, einem Metall oder einem Verbundwerkstoff, ist bevorzugt aber aus Glas gebildet.

Grundsätzlich kann die Vertiefung zu einem beliebigen Zeitpunkt eingebracht werden, beispielsweise auch nach Herstellung der Flasche. Bevorzugt ist es jedoch, dass die Flasche während deren Formung mit der Vertiefung ausgebildet wird. Hierfür sind zweckmäßigerweise entsprechende Formen vorgesehen, die während der Flaschenherstellung, z. B. bei erhöhten Temperaturen aus flüssigem Glas, bereits die Einbringung der Vertiefung erlauben. Dabei ist eine Kontur der Form im Bereich der Vertiefung korrespondierend ausgebildet. Damit sich die Vertiefung einfach mit der Form einbringen lässt, wird die Vertiefung ohne Hinterschneidung oder Auskehlung ausgebildet. Bei der Ausbildung der Vertiefung ist es auch zweckmäßig, wenn diese nach außen hin konisch verbreiternd ausgebildet wird. Dadurch lässt sich die Flasche einfach von der Form lösen. Ein Boden der Vertiefung kann dann insbesondere flach bzw. eben ausgebildet werden.

Auf die besondere Form der Vertiefung kommt es grundsätzlich nicht an. Diese richtet sich nach dem später zu befestigenden Gegenstand. Für viele Zwecke ist es günstig, wenn die Vertiefung kreisförmig ausgebildet ist. Es kommen jedoch durchaus auch andere Formen der Vertiefung infrage, beispielsweise quadratisch, rechteckig, fünfeckig oder auch achteckig.

Die Vertiefung kann an beliebigen Stellen der Flasche eingebracht werden, je nachdem, wo später der Gegenstand befestigt werden soll. Damit der Gegenstand, der in der Regel einen besonders hohen materiellen Wert aufweist, besonders gut ersichtlich ist, wird die Vertiefung günstigerweise zwischen einem Flaschenboden und einem Flaschenhals eingebracht. Beispielsweise kann die Vertiefung etwa mittig im Bereich einer Flasche vorgesehen sein. Dadurch ist der Gegenstand sofort ersichtlich und signalisiert einem potenziellen Kunden unmittelbar den Mehrwert der Kombination von Flasche und darauf befestigtem Gegenstand. Möglich ist es auch, mehrere Vertiefungen vorzusehen und diese jeweils mit einem Gegenstand zu belegen.

Für die Befestigung des Gegenstandes könnten jegliche Befestigungsmethoden zur Anwendung kommen, mit welchen der Gegenstand einerseits in der Vertiefung der Flasche befestigbar ist, andererseits aber auch ohne Schäden wieder abgenommen werden kann. Hierzu zählen insbesondere eine Befestigung mittels doppelseitigen Klebebändern oder stoffschlüssige Verbindungen, die durch Manneskraft leicht wieder gelöst werden können und keine Spuren am ehemals befestigten Gegenstand hinterlassen. Erfindungsgemäß ist es jedoch vorgesehen, dass der Gegenstand in einen zumindest teilweise flexiblen Adapter aufgenommen und mit dem Adapter in der Vertiefung positioniert wird. Die Flexibilität des Adapters hat dabei eine duale Funktion: Durch die Flexibilität des Adapters kann einerseits der Gegenstand im Adapter relativ einfach befestigt, aus diesem aber auch wieder gelöst werden, beispielsweise durch Klemmen und anschließendes Herauslösen. Andererseits lässt sich der Adapter mit dem bereits aufgenommenem Gegenstand anschließend auch leicht in der Vertiefung der Flasche positionieren, da durch die Flexibilität des Adapters dieser etwas nachgiebig ist und somit leicht in der Vertiefung geklemmt werden kann, sodass der Gegenstand bis zu einem Lösen des Adapters dauerhaft auf der Flasche befestigt ist. Hierfür ist es vorgesehen, dass ein Adapter aus einem Kunststoff eingesetzt wird. Der Kunststoff ist elastisch verformbar, damit die gewünschte Flexibilität gegeben ist. Hierfür ist der Adapter vorzugsweise der Vertiefung angepasst ausgebildet, um mit dem Gegenstand in diese geklemmt zu werden. Möglich sind vollflächige Adapter, welche den Gegenstand aufnehmen und die Fläche der Vertiefung vollständig belegen. Es können aber auch ringförmige Adapter vorgesehen sein, bei welchen eine Klemmwirkung durch ein Zusammenspiel zwischen dem aufzunehmenden Gegenstand und der Vertiefung erreicht wird, indem der dazwischen gelagerte Adapter elastisch verformt wird. Der flexible Adapter kann auch als Band, z. B. Kunststoffband, ausgebildet sein. Unabhängig von der konkreten Ausbildung kann der Adapter auch zusätzlich Lichtquellen wie LEDs aufweisen, um den Gegenstand zu beleuchten und damit noch besser ins Bild zu setzen.

Im Speziellen ist es günstig, dass ein mehrteiliger Adapter mit einem Unterteil und einem Oberteil eingesetzt wird, wobei der Gegenstand zwischen Unterteil und Oberteil aufgenommen wird. Das Unterteil kann an der Flasche am Boden der Vertiefung fixiert werden, wohingegen das Oberteil vom Unterteil aufgenommen wird und die Vertiefung ausfüllt. Für ein optimales Erscheinungsbild, aber auch eine gute Hantierbarkeit der Flasche kann die Oberfläche der Flasche mit dem Oberteil bündig und flächig ergänzt werden.

Von Vorteil ist es, wenn das Unterteil des Adapters mit einer härteren Komponente und einer weicheren Komponente ausgebildet wird, wobei die härtere Komponente an der Flasche fixiert wird. Die härtere Komponente nimmt dann die weichere Komponente auf, die wiederum das Oberteil des Adapters aufnimmt und zu diesem Zweck flexibel bzw. nachgiebig ausgebildet ist. Die härtere Komponente und die weichere Komponente können durch Stecken miteinander lösbar verbunden werden. Das Oberteil des Adapters kann auf die weichere Komponente aufgesteckt werden, sodass dieses mit akzeptablem Kraftaufwand auch wieder lösbar ist, um z. B. den Gegenstand zu entnehmen oder zu tauschen.

Um den Gegenstand positionsstabil im Adapter zu halten, kann ein Zwischenstück zum Fixieren des Gegenstandes zwischen dem Unterteil und dem Oberteil des Adapters positioniert werden.

Prinzipiell können beliebige Gegenstände vorgesehen sein. Um der Flasche jedoch neben einer ansprechenden optischen Erscheinungsform auch den gewünschten Mehrwert zu verleihen, wird bevorzugt als Gegenstand eine Münze eingesetzt.

Das weitere Ziel der Erfindung wird durch eine Flasche der eingangs genannten Art erreicht, wobei der Gegenstand in einem zumindest teilweise flexiblen Adapter aufgenommen und dem Adapter in der Vertiefung positioniert ist, wobei der Adapter aus einem elastisch verformbaren Kunststoff ausgebildet ist und der Gegenstand aus einem weniger verformbaren Material als der Kunststoff besteht.

Eine erfindungsgemäße Flasche weist unter anderem den Vorteil auf, dass durch die vorgesehene Vertiefung ein hochwertiger Gegenstand aufgenommen werden kann, welcher der Flasche einen Mehrwert verleiht, wobei es aber auch möglich ist, bei Bedarf den Gegenstand von der Flasche zu entfernen. Insbesondere ist es auch möglich, entsprechend ausgebildete Flaschen in Verkaufsräumen von Geschäften zu präsentieren, ohne dass eine große Gefahr besteht, dass die an sich wertvollen Gegenstände entwendet werden.

Mit Vorteil ist die Vertiefung zwischen einem Flaschenboden und einem Flaschenhals angeordnet, um den Mehrwert der Flasche durch den aufgebrachten Gegenstand möglichst deutlich zur Geltung zu bringen.

Die Vertiefung ist mit dem Vorteil einer einfachen Herstellung ohne Hinterschneidung oder Auskehlung ausgebildet. Hierbei kann insbesondere vorgesehen sein, dass die Vertiefung nach außen hin konisch verbreiternd ausgebildet ist.

Die Vertiefung ist üblicherweise kreisförmig ausgebildet, obwohl auch andere Gestaltungen infrage kommen. Bevorzugt ist die Vertiefung mit einem ebenen Boden ausgebildet, was eine flächige Anbringung eines Objektes in der Vertiefung erleichtert.

Vorgesehen ist, dass der Gegenstand in einem zumindest teilweise flexiblen Adapter aufgenommen und mit dem Adapter in der Vertiefung positioniert ist. Es lässt sich dann sowohl der Gegenstand im Adapter als auch der Adapter mit dem Gegenstand leicht in der Vertiefung lösbar fixieren. Hierfür ist insbesondere vorgesehen, dass der Adapter aus einem Kunststoff ausgebildet ist. Der Gegenstand kann dann insbesondere aus einer Münze bestehen, die in der Regel aus einem Metall gebildet ist und damit aufgrund der geringeren elastischen Verformbarkeit den Adapter verformt, der sich wiederum, auch aufgrund dessen niedriger Verformbarkeit, der Vertiefung der Flasche aus Glas anpassen muss. Im Allgemeinen ist der Adapter aus einem Kunststoff gebildet und der Gegenstand besteht aus einem weniger verformbaren Material als der Kunststoff, beispielsweise aus einem Metall wie einem Edelmetall oder aus einem oder mehreren Edelsteinen. Möglich ist dabei selbstverständlich, dass mehrere Gegenstände in einer einzigen Vertiefung positioniert sind.

In einer bevorzugten Ausführungsvariante ist der Adapter mehrteilig mit einem Unterteil und einem Oberteil ausgebildet und der Gegenstand zwischen Unterteil und Oberteil aufgenommen. Dadurch kann der Gegenstand perfekt in Position gehalten werden. Für eine anmutige Erscheinung ist es zweckmäßig, dass eine Oberfläche der Flasche mit dem Oberteil bündig und flächig ergänzt ist.

Das Unterteil des Adapters kann mit einer härteren Komponente und einer weicheren Komponente ausgebildet sein, wobei die härtere Komponente an der Flasche fixiert ist. Die härtere Komponente und die weichere Komponente sind in diesem Fall mit Vorteil durch Stecken miteinander lösbar verbunden. Das Oberteil des Adapters kann wiederum auf die weichere Komponente aufgesteckt sein.

Zum dauerhaft stabilen Halten des Gegenstandes kann ein Zwischenstück zum Fixieren des Gegenstandes zwischen dem Unterteil und dem Oberteil des Adapters positioniert sein.

Weitere Merkmale, Vorteile und Wirkungen der Erfindungen ergeben sich aus dem nachfolgend dargestellten Ausführungsbeispiel. In den Zeichnungen, auf welche dabei Bezug genommen wird, zeigen:
- Fig. 1: eine Flasche mit einer Vertiefung in Seitenansicht;
- Fig. 2: eine Flasche gemäß Fig. 1 in einer stirnseitigen Ansicht;
- Fig. 3: eine erfindungsgemäße Flasche;
- Fig. 4: eine weitere erfindungsgemäße Flasche;
- Fig. 5: einen Adapter;
- Fig. 6: eine Explosionsdarstellung einer Flasche mit Adapter;
- Fig. 7: bis 10 einzelne Teile eines Unterteils eines Adapters.

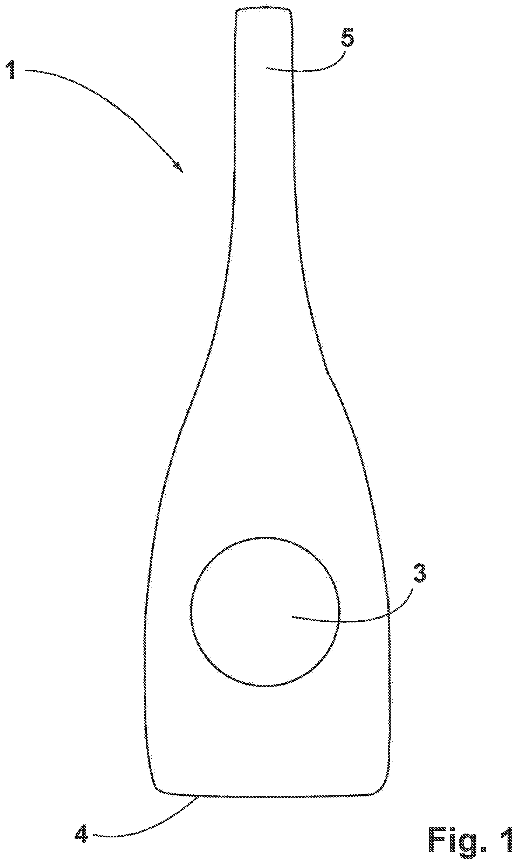

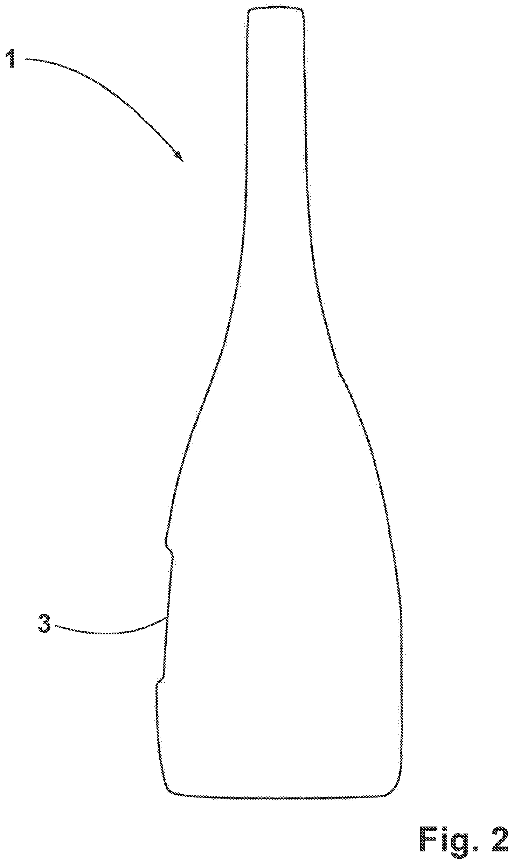

In Fig. 1 ist eine Flasche 1 mit einer Vertiefung 3 dargestellt. Die Flasche 1 weist einen Flaschenboden 4 sowie einen Flaschenhals 5 auf. Am Flaschenhals 5 kann ein Verschluss wie ein Schraubverschluss oder ein Korken positioniert sein. Die Vertiefung 3 ist zwischen dem Flaschenboden 4 und dem Flaschenhals 5 positioniert. Grundsätzlich könnte die Vertiefung 3 aber auch im Bereich des Flaschenbodens 4 vorgesehen sein, wenngleich dies aus Präsentationszwecken weniger zweckmäßig ist. Die Vertiefung 3 kann mit einer beliebigen Form ausgebildet sein, ist jedoch gemäß Fig. 2 bevorzugt rund ausgebildet. Weitere bevorzugte Ausbildungen betreffen insbesondere eine rechteckige Ausformung. Eine Höhe der Vertiefung 3 ist dabei so bemessen, dass im Herstellungsprozess eine Stabilität der Flaschenwand sichergestellt ist.

Zweckmäßigerweise ist die Vertiefung 3 daher maximal halb so tief wie die Flaschenwand im Bereich um die Vertiefung 3.

In die Vertiefung 3, die in Fig. 1 und 2 ersichtlich ist, kann ein Gegenstand 2 eingebracht werden. Dies erfolgt zweckmäßigerweise so, dass der Gegenstand 2, beispielsweise eine Münze, eine Scheibe eines Meteoriten oder ein anderer hochwertiger Gegenstand, zunächst in einem Adapter 6 aus einem elastisch verformbaren Kunststoff, vorzugsweise einem transparenten Kunststoff, angeordnet wird. Handelt es sich bei der Vertiefung 3 um eine runde Vertiefung 3, wie in Fig. 1 und 2 dargestellt, ist der Adapter 6 ebenfalls rund ausgebildet und entspricht in seinem äußeren Durchmesser in etwa dem freien Durchmesser der Vertiefung 3. Der Adapter 6 ist seinerseits in der Regel ebenfalls mit einer Ausbuchtung ausgebildet, in welcher der Gegenstand 2 zunächst positioniert wird.

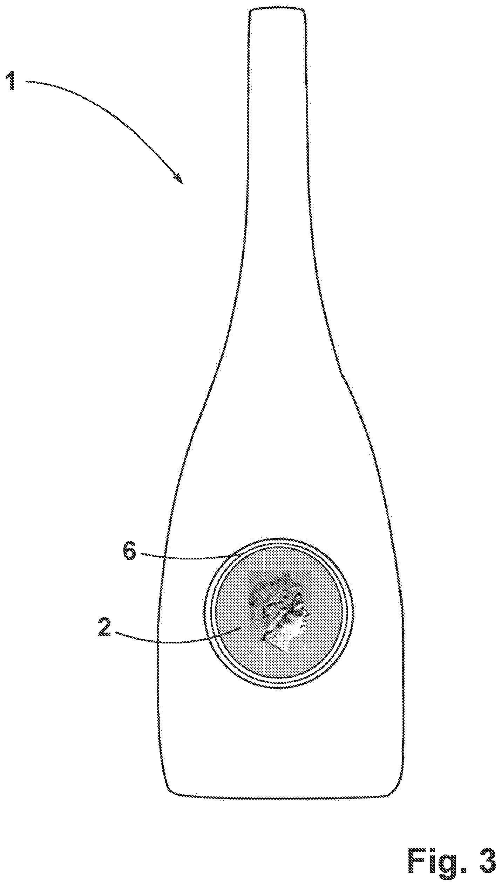

Anschließend wird der Adapter 6 mit dem darauf gehaltenen Gegenstand 2 in der Vertiefung 3 angeordnet. Ist der Adapter 6 aus einem elastischen Kunststoff gefertigt und ist ein äußerer Durchmesser des Adapters 6 geringfügig größer als der oder die Durchmesser der Vertiefung 3, so kann der Adapter 6 mit dem Gegenstand 2 in einfacher Weise in der Vertiefung 3 durch Einklemmen positioniert werden, wie dies in Fig. 3 ersichtlich ist. Der so auf der Flasche 2 angeordnete Gegenstand 2 ist dann grundsätzlich dauerhaft auf der Flasche 1 befestigt, kann jedoch durch Anwendung moderater Kräfte bei Bedarf wieder händisch von dieser gelöst werden.

Eine Herstellung der Flasche 1 mit der Vertiefung 3, die als Ausgangsprodukt für die spätere Befestigung des Gegenstandes 2 dient, wird zweckmäßigerweise so vorgegangen, dass bereits bei der Erstellung der Flasche 1 die Vertiefung mitgeformt wird. Dies ist durch entsprechende Ausbildung von Formen ohne Weiteres möglich. Alternativ ist es selbstverständlich denkbar, dass die Vertiefung nachträglich eingebracht wird, was jedoch wesentlich aufwendiger ist.

Das vorstehende Ausführungsbeispiel bezieht sich auf eine übliche Spirituosenflasche wie eine Weinflasche. Es ist selbstverständlich möglich, das erläuterte Konzept auch bei anderen Flaschen aus Glas, z. B. Parfumflaschen oder andere Arten von Flaschen, anzuwenden.

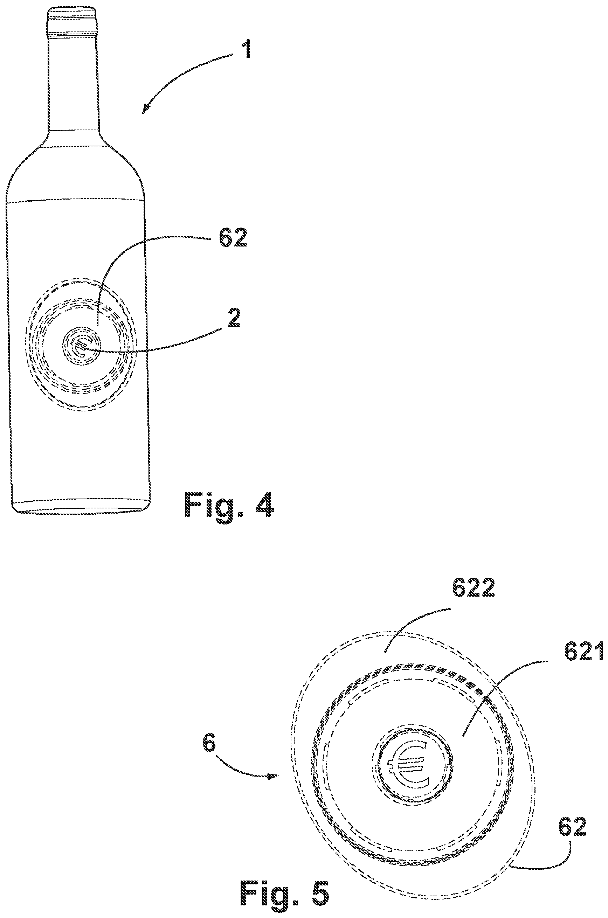

In Fig. 4 bis 10 ist ein weiteres Ausführungsbeispiel einer erfindungsgemäßen Flasche 1 mit einem Adapter 6 dargestellt, wobei der Adapter 6 mehrteilig aufgebaut ist. Der Adapter 6 ist mehrteilig mit einem Unterteil 61 und einem Oberteil 62 ausgebildet. In der stirnseitigen Ansicht gemäß Fig. 4 ist nur das Oberteil 62 ersichtlich, das aus einem transparenten Material, insbesondere einem transparenten und vorzugsweise zumindest geringfügig elastisch nachgebenden Kunststoff geformt ist. Aufgrund der Transparenz des Oberteils 62 ist ein an der Flasche 1 befestigter Gegenstand 2 ersichtlich. Gemäß Fig. 5 ist das Oberteil 62 des Adapters 6 mit einer auf Hochglanz polierten Oberfläche 621 und einer matten Oberfläche 622 gestaltet. Durch diese Gestaltung wird der Fokus noch deutlicher auf den Gegenstand 2 gerichtet. Die Oberfläche 622 kann auch in anderer Weise gestaltet sein, beispielsweise durch Einbringung eines Logos, das beim Spritzgießen oder einem anderen Herstellvorgang in die Oberfläche 622 eingebracht wird.

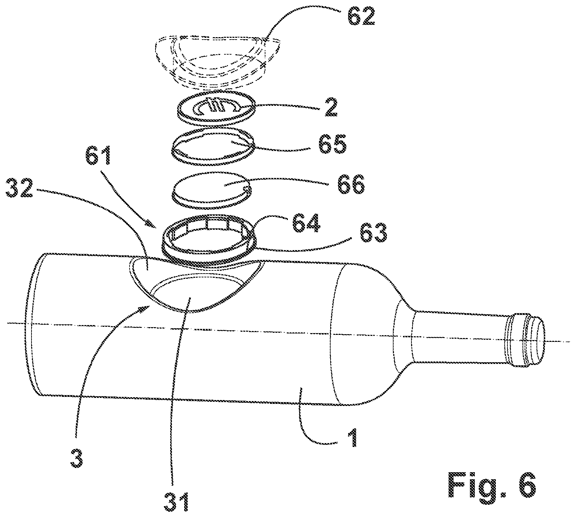

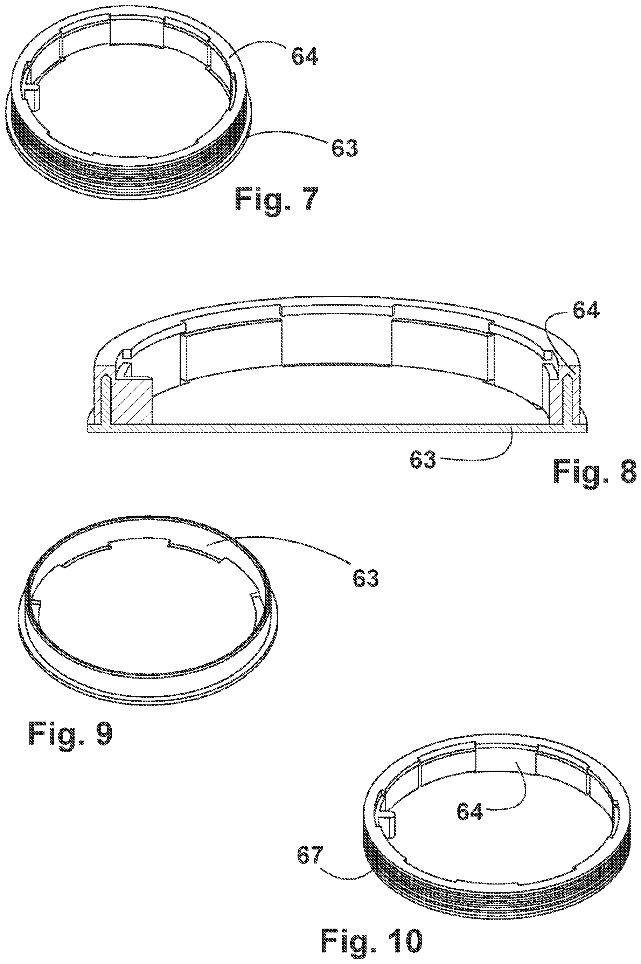

In Fig. 6 ist ein Aufbau einer erfindungsgemäßen Flasche 1 mit einem mehrteiligen Adapter 6 anhand einer Explosionsdarstellung näher veranschaulicht. Die das Unterteil 61 bildenden Komponenten sind in Fig. 7 bis 10 gesondert dargestellt. Wie in Fig. 6 ersichtlich, ist die Flasche 1 mit einer Vertiefung 3 ausgebildet, wobei die Vertiefung 3 einen ebenen Boden 31 aufweist. Nach außen hin weist die Vertiefung 3 eine konische Verbreiterung 32 auf. Die Vertiefung 3 wird während der Erstellung der Flasche 1 eingebracht, die üblicherweise aus einem Glas besteht. Die Schwierigkeit hierbei besteht darin, die Flasche 1 mit der Vertiefung 3 auszubilden, ohne dass die Vertiefung 3 eine zu leichtem Bruch führende Schwachstelle darstellt. Um dies zu erreichen, ist die Wand der Flasche 1 im Bereich der Vertiefung 3 mit einer Stärke gebildet, die maximal auf die Hälfte der Stärke der Flasche 1 in den übrigen Bereichen reduziert ist. Zwar führt die geringere Stärke der Flasche 1 im Bereich der Vertiefung 3 zwangsläufig zu einer geringeren Belastbarkeit, da allerdings später der Adapter 6 eingesetzt wird und dieser bündig mit einer Oberfläche der Flasche 1 abschließt, kann bei normalem Hantieren kein besonders hoher Druck auf die Vertiefung 3 bzw. deren Boden 31 aufgebracht werden, sodass letztlich eine Bruchgefahr trotz minimierter Stärke im Bereich der Vertiefung 3 gering ist. Der Adapter 6 ist wie erwähnt mehrteilig aufgebaut und umfasst das Unterteil 61 und das Oberteil 62 sowie ein Zwischenstück 65. Das Unterteil 61 ist als solches ebenfalls mehrteilig aufgebaut und umfasst eine härtere Komponente 63 sowie eine weichere Komponente 64. Die härtere Komponente 63 liegt als runder Ring vor und wird am Boden 31 der Vertiefung 3 befestigt. Die Befestigung erfolgt in der Regel durch Kleben. Auf die härtere Komponente 63 des Unterteils 61 wird die weichere Komponente 64 aufgesetzt, die in späterer Folge auch als Dichtung für die innenliegenden Teil dient. Beim Aufsetzen schnappt die weichere Komponente 64 mit korrespondierenden Aussparungen in die härtere Komponente 63 ein. Insbesondere kann die weichere Komponente 64 auf die härtere Komponente 63 aufgesteckt und gegen Verdrehen positionell gesichert werden, wie dies im Querschnitt in Fig. 8 ersichtlich ist. Die weichere Komponente 64 ist im Bereich einer Außenseite mit radial umlaufenden Rippen 67 gebildet. Das an der Flasche 1 befestigte Unterteil 61 nimmt in der Folge, sofern vorgesehen, eine Platine 66 samt Stromversorgung auf. Im Anschluss an die Platine 66 folgt das Zwischenstück 65, das als Halter für einen zu befestigenden Gegenstand 2, insbesondere wie dargestellt eine Münze, fungiert. Das Zwischenstück 65 bzw. der Halter ist ebenfalls rund ausgebildet und an einer Oberseite für die Aufnahme eines Gegenstandes 2 bestimmter Größe ausgebildet. Werden beispielsweise unterschiedlich große Münzen verwendet, ist das Zwischenstück 65 an der Oberseite entsprechend zur passgenauen Aufnahme einer Münze jeweiliger Größe ausgebildet. Abgeschlossen wird die Vertiefung 3 durch das Oberteil 62, das nach außen hin gebogen ausgeführt ist. Das Oberteil 62 ist dabei außenseitig so ausgebildet, dass die Oberfläche der Flasche 1 durch das Oberteil 62 unter Herstellung einer üblichen Flaschenform vervollständigt wird. Dadurch lässt sich die Flasche 1 gut greifen, ohne dass wie zuvor erwähnt eine besonders erhöhte Bruchgefahr im Bereich der Vertiefung 3 gegeben ist, an welcher eine verminderte Wandstärke der Flasche 1 vorliegt. Das Oberteil 62 greift bei der Befestigung an den Rippen 67 der weicheren Komponente 64 des Unterteils 61 außenseitig an. Aufgrund der vorgesehenen Rippen 67 lässt sich das Oberteil 62 relativ leicht aufstecken und am Unterteil 61 lösbar fixieren. Der Halt des Oberteils 62 an der weicheren Komponente 64 des Unterteils 61 ist allerdings so groß, dass sich dieses im üblichen Gebrauch der Flasche 1 nicht ohne Weiteres vom Unterteil 61 löst. Das Oberteil 62 ist ebenso wie die weichere Komponente 64 des Unterteils 61 aus einem Kunststoff geformt, der eine gewisse Mindestelastizität aufweist, sodass diese Teile relativ einfach aneinandergedrückt werden können, auch wenn mit dem Zwischenstück 65 und der Platine 66 weitere Komponenten dazwischen aufgenommen werden. Die in Fig. 6 dargestellte Platine 66 ist nicht zwingend, kann aber vorgesehen sein, wenn die Platine 66 z. B. mit LEDs oder anderen Komponenten ausgebildet ist. Beispielsweise kann unterhalb der matten Oberfläche 621 des Oberteils 62 an der Platine 66 eine Reihe von ringförmig angeordneten LEDs vorgesehen sein, die über die Platine 66 angesteuert und von der vorgesehenen Stromversorgung bedient werden. Dadurch ist es zusätzlich möglich, einen Fokus auf den an der Flasche 1 befestigten Gegenstand 2 zu lenken, da neben dem Gegenstand 2 von den LEDs abgestrahltes Licht aus dem Adapter 6 austritt. Die Platine 66 sowie auch der Gegenstand 2 sind gegen äußere Einflüssen durch die dichtend wirkende weichere Komponente 64 gesichert.

Mit einem Aufbau gemäß Fig. 6 bis 10 ergibt sich der Vorteil, dass bei im Wesentlichen gleich gestaltetem Adapter 6 Gegenstände 2 verschiedener Größe an verschiedenen Flaschen 1 befestigt werden können. Hierfür ist es nur erforderlich, das Zwischenstück 65 für den jeweiligen Gegenstand 2 wie eine Münze geeignet anzupassen. Aufgrund der Abstimmung der Materialeigenschaften des Oberteils 62 aus einem etwas nachgiebigen Kunststoff sowie eine entsprechende Ausbildung des Unterteils 61 mit einer härteren Komponente 63 und einer weicheren, mit dem Oberteil 62 zusammenwirkenden Komponente 64 ergibt sich darüber hinaus der Vorteil einer dichten Verbindung, die insbesondere bei Aufnahme einer Platine 66 wichtig sein kann, um eine Langlebigkeit des Produktes sicherzustellen.

Wenn eine Platine 66 samt Stromversorgung wie einem Akkumulator vorgesehen ist, kann es zweckmäßig sein, dünne metallische Drähte wie Golddrähte durch schmale Öffnungen aus dem Oberteil 62 des Adapters 6 zu führen und deren freie Enden unterhalb einer Etikette der Flasche 1 zu platzieren. An den Enden der Drähte sind dann vorzugsweise flächige Pole vorgesehen, über welche eine Kontaktierung der Drähte und damit ein Laden des Akkumulators erfolgen können. Dadurch kann der Akkumulator bei Bedarf geladen werden. Wenn eine Platine 66 vorgesehen ist, kann diese einen durch einen Magneten aktivierbaren Schalter umfassen. Dies ermöglicht es, dass der Schalter von außen durch den Magneten schaltbar ist, sodass das Oberteil 62 des Adapters 6 nicht abzunehmen ist, um beispielsweise eine ringförmige LED-Anordnung an der Platine 66 ein- oder auszuschalten.

## Patentansprüche

1. Verfahren zur Herstellung einer Flasche (1) aus beispielsweise Glas, insbesondere einer Getränkeflasche, wobei auf der Flasche (1) ein Gegenstand (2) befestigt wird, wobei die Flasche (1) mit einer Vertiefung (3) ausgebildet wird, woraufhin in der Vertiefung (3) der Gegenstand (2) lösbar befestigt wird, **dadurch gekennzeichnet, dass** der Gegenstand (2) in einen zumindest teilweise flexiblen Adapter (6) aufgenommen und mit dem Adapter (6) in der Vertiefung (3) positioniert wird und ein Adapter (6) aus einem elastisch verformbaren Kunststoff eingesetzt wird.

2. Verfahren nach Anspruch 1, **dadurch gekennzeichnet, dass** die Flasche (1) während deren Formung mit der Vertiefung (3) ausgebildet wird.

3. Verfahren nach Anspruch 1 oder 2, **dadurch gekennzeichnet, dass** ein mehrteiliger Adapter (6) mit einem Unterteil (61) und einem Oberteil (62) eingesetzt wird, wobei der Gegenstand (2) zwischen Unterteil (61) und Oberteil (62) aufgenommen wird.

4. Verfahren nach Anspruch 3, **dadurch gekennzeichnet, dass** eine Oberfläche der Flasche (1) mit dem Oberteil (62) bündig und flächig ergänzt wird.

5. Verfahren nach einem der Ansprüche 1 bis 4, **dadurch gekennzeichnet, dass** das Unterteil (61) des Adapters (6) mit einer härteren Komponente (63) und einer weicheren Komponente (64) ausgebildet wird, wobei die härtere Komponente (63) an der Flasche (1) fixiert wird.

6. Verfahren nach Anspruch 5, **dadurch gekennzeichnet, dass** die härtere Komponente (63) und die weichere Komponente (64) durch Stecken miteinander lösbar verbunden werden.

7. Verfahren nach Anspruch 5 oder 6, **dadurch gekennzeichnet, dass** das Oberteil (62) des Adapters (6) auf die weichere Komponente (64) aufgesteckt wird.

8. Verfahren nach einem der Ansprüche 1 bis 7, **dadurch gekennzeichnet, dass** als Gegenstand (2) eine Münze eingesetzt wird.

9. Flasche (1) aus beispielsweise Glas, insbesondere Getränkeflasche, wobei auf der Flasche (1) ein Gegenstand (2) befestigt ist, wobei die Flasche (1) mit einer Vertiefung (3) ausgebildet ist, in welcher der Gegenstand (2) lösbar befestigt ist, **dadurch gekennzeichnet, dass** der Gegenstand (2) in einem zumindest teilweise flexiblen Adapter (6) aufgenommen und mit dem Adapter (6) in der Vertiefung (3) positioniert ist, wobei der Adapter (6) aus einem elastisch verformbaren Kunststoff ausgebildet ist und der Gegenstand (2) aus einem weniger verformbaren Material als der Kunststoff besteht.

10. Flasche (1) nach Anspruch 9, **dadurch gekennzeichnet, dass** der Adapter (6) mehrteilig mit einem Unterteil (61) und einem Oberteil (62) ausgebildet ist und der Gegenstand (2) zwischen Unterteil (61) und Oberteil (62) aufgenommen ist.

11. Flasche (1) nach Anspruch 10, **dadurch gekennzeichnet, dass** eine Oberfläche der Flasche (1) mit dem Oberteil (62) bündig und flächig ergänzt ist.

12. Flasche (1) nach Anspruch 10 oder 11, **dadurch gekennzeichnet, dass** das Unterteil (61) des Adapters (6) mit einer härteren Komponente (63) und einer weicheren Komponente (64) ausgebildet ist, wobei die härtere Komponente (63) an der Flasche (1) fixiert ist.

13. Flasche (1) nach Anspruch 12, **dadurch gekennzeichnet, dass** die härtere Komponente (63) und die weichere Komponente (64) durch Stecken miteinander lösbar verbunden sind.

14. Flasche (1) nach Anspruch 12 oder 13, **dadurch gekennzeichnet, dass** das Oberteil (62) des Adapters (6) auf die weichere Komponente (64) aufgesteckt ist.

15. Flasche (1) nach einem der Ansprüche 9 bis 14, **dadurch gekennzeichnet, dass** ein Zwischenstück (65) zum Fixieren des Gegenstandes (2) zwischen dem Unterteil (61) und dem Oberteil (62) des Adapters (6) positioniert ist.

## Claims

1. Method for producing a bottle (1) made of, for example, glass, in particular a drinks bottle, wherein an object (2) is attached to the bottle (1), wherein the bottle (1) is formed with a recess (3), whereupon the object (2) is releasably fixed in the recess (3), **characterized in that** the object (2) is accommodated in an at least partly flexible adapter (6) and is positioned in the recess (3) with the adapter (6) and an adapter (6) made from an elastically deformable plastic is used.

2. Method according to claim 1, **characterized in that** the bottle (1) is formed with the recess (3) during its moulding.

3. Method according to claim 1 or 2, **characterized in that** a multi-part adapter (6) with a lower part (61) and an upper part (62) is used, wherein the object (2) is accommodated between the lower part (61) and upper part (62) .

4. Method according to claim 3, **characterized in that** one surface of the bottle (1) is completed flush and flat with the upper part (62).

5. Method according to one of claims 1 to 4, **characterized in that** the lower part (61) of the adapter (6) is formed with a harder component (63) and a softer component (64) wherein the harder component (63) is fixed to the bottle (1).

6. Method according to claim 5, **characterized in that** the harder component (63) and the softer component (64) are releasably connected to one another by fitting.

7. Method according to claim 5 or 6, **characterized in that** the upper part (62) of the adapter (6) is fitted onto the softer component (64).

8. Method according to one of claims 1 to 7, **characterized in that** a coin is used as the object (2).

9. Bottle (1) made of, for example, glass, in particular a drinks bottle, wherein an object (2) is attached to the bottle (1), wherein the bottle (1) is formed with a recess (3), in which the object (2) is releasably fixed, **characterized in that** the object (2) is accommodated in an at least partly flexible adapter (6) and is positioned in the recess (3) with the adapter (6), wherein the adapter (6) is formed from an elastically deformable plastic and the object (2) consists of a less deformable material than the plastic.

10. Bottle (1) according to claim 9, **characterized in that** the adapter (6) has a multi-part design with a lower part (61) and an upper part (62) and the object (2) is accommodated between the lower part (61) and upper part (62) .

11. Bottle (1) according to claim 10, **characterized in that** one surface of the bottle (1) is completed flush and flat with the upper part (62).

12. Bottle (1) according to claim 10 or 11, **characterized in that** the lower part (61) of the adapter (6) is formed with a harder component (63) and a softer component (64) wherein the harder component (63) is fixed to the bottle (1).

13. Bottle (1) according to claim 12, **characterized in that** the harder component (63) and the softer component (64) are releasably connected to one another by fitting.

14. Bottle (1) according to claim 12 or 13, **characterized in that** the upper part (62) of the adapter (6) is fitted onto the softer component (64).

15. Bottle (1) according to one of claims 9 to 14, **characterized in that** an intermediate piece (65) for fixing the object (2) is positioned between the lower part (61) and the upper part (62) of the adapter (6).

## Revendications

1. Procédé, destiné à fabriquer une bouteille (1), par exemple en verre, notamment une bouteille pour boisson, lors duquel l'on fixe sur la bouteille (1) un objet (2), l'on conçoit la bouteille (1) avec un creux (3), suite à quoi, l'on fixe l'objet (2) de manière amovible dans le creux (3), **caractérisé en ce que** l'objet (2) est réceptionné dans un adaptateur (6) au moins partiellement souple et positionné par l'adaptateur (6) dans le creux (3) et l'on met en œuvre un adaptateur (6) en une matière plastique élastiquement déformable.

2. Procédé selon la revendication 1, **caractérisé en ce que** l'on conçoit la bouteille (1) avec le creux (3) lors de son façonnage.

3. Procédé selon la revendication 1 ou 2, **caractérisé en ce que** l'on met en œuvre un adaptateur (6) en plusieurs parties, doté d'une partie inférieure (61) et d'une partie supérieure (62), l'objet (2) étant réceptionné entre la partie inférieure (61) et la partie supérieure (62).

4. Procédé selon la revendication 3, **caractérisé en ce que** l'on complète une surface de la bouteille (1) avec la partie supérieure (62), de manière affleurante et plane.

5. Procédé selon l'une quelconque des revendications 1 à 4, **caractérisé en ce que** l'on conçoit la partie inférieure (61) de l'adaptateur (6) avec un composant (63) plus dur et un composant (64) plus souple, le composant (63) plus dur étant fixé sur la bouteille (1) .

6. Procédé selon la revendication 5, **caractérisé en ce que** l'on assemble l'un à l'autre de manière amovible le composant (63) plus dur et le composant (64) plus souple par emboîtement.

7. Procédé selon la revendication 5 ou 6, **caractérisé en ce que** l'on emboîte la partie supérieure (62) de l'adaptateur (6) sur le composant (64) plus souple.

8. Procédé selon l'une quelconque des revendications 1 à 7, **caractérisé en ce que** l'on insère en tant qu'objet (2) une pièce de monnaie.

9. Bouteille (1), par exemple en verre, notamment une bouteille pour boisson, sur la bouteille (1) étant fixé un objet (2), la bouteille (1) étant conçue avec un creux (3) dans lequel l'objet (2) est fixé de manière amovible, **caractérisée en ce que** l'objet (2) est réceptionné dans un adaptateur (6) au moins partiellement flexible et positionné par l'adaptateur (6) dans le creux (3), l'adaptateur (6) étant conçu en une matière élastiquement déformable et l'objet (2) étant constitué d'une matière moins déformable que la matière plastique.

10. Bouteille (1) selon la revendication 9, **caractérisée en ce que** l'adaptateur (6) est conçu en plusieurs parties, avec une partie inférieure (61) et une partie supérieure (62) et l'objet (2) est réceptionné entre la partie inférieure (61) et la partie supérieure (62) .

11. Bouteille (1) selon la revendication 10, **caractérisée en ce qu'**une surface de la bouteille (1) est complétée avec la partie supérieure (62), de manière affleurante et plane.

12. Bouteille (1) selon la revendication 10 ou 11, **caractérisée en ce que** la partie inférieure (61) de l'adaptateur (6) est conçue avec un composant (63) plus dur et un composant (64) plus souple, le composant (63) plus dur étant fixé sur la bouteille (1) .

13. Bouteille (1) selon la revendication 12, **caractérisée en ce que** le composant (63) plus dur et le composant (64) plus souple sont assemblés l'un à l'autre de manière amovible par emboîtement.

14. Bouteille (1) selon la revendication 12 ou 13, **caractérisée en ce que** la partie supérieure (62) de l'adaptateur (6) est emboîtée sur le composant (64) plus souple.

15. Bouteille (1) selon l'une quelconque des revendications 9 à 14, **caractérisée en ce qu'**une pièce intercalaire (65) destinée à fixer l'objet (2) est positionnée entre la partie inférieure (61) et la partie supérieure (62) de l'adaptateur (6).
